Europäisches Patentamt

European Patent Office

Office européen des brevets

(19)

(11) Veröffentlichungsnummer : **0 347 595 B1**

(12) # EUROPÄISCHE PATENTSCHRIFT

(45) Veröffentlichungstag der Patentschrift :
**22.04.92 Patentblatt 92/17**

(51) Int. Cl.$^5$ : **C02F 1/00**

(21) Anmeldenummer : **89109210.8**

(22) Anmeldetag : **23.05.89**

(54) **Verfahren zum Betreiben einer Kläranlage.**

(30) Priorität : **22.06.88 DE 3821009**

(43) Veröffentlichungstag der Anmeldung :
**27.12.89 Patentblatt 89/52**

(45) Bekanntmachung des Hinweises auf die
Patenterteilung :
**22.04.92 Patentblatt 92/17**

(84) Benannte Vertragsstaaten :
**AT BE CH DE ES FR GB GR IT LI LU NL SE**

(56) Entgegenhaltungen :
**E.W. STEEL: "Water supply and sewerage",
1947, Kapitel II: "Quantity of water and sewage", Seiten 8-27, McGraw-Hill Book Co., New
York, US**

(56) Entgegenhaltungen :
**K.R. DIETRICH: "Die Abwassertechnik", Kapitel XXXIX: "Kanalisation und Kanalisationsnetz", 1973, Seiten 390-396, A. Hüthig Verlag,
Heidelberg, DE
BACKWASH DISCHARGES, Band 52, Nr. 8,
August 1980, Seiten 2193-2198; R.M. RAN-
DOLPH et al.: "Pipe storage for equalization of
backwash discharges to sanitary sewers"**

(73) Patentinhaber : **Bergmann, Fritz, Dipl.-Ing.
Sackstrasse 9
W-3408 Duderstadt (DE)**

(72) Erfinder : **Bergmann, Fritz, Dipl.-Ing.
Sackstrasse 9
W-3408 Duderstadt (DE)**

(74) Vertreter : **Döring, Roger, Dipl.-Ing.
Weidenkamp 2
W-3012 Langenhagen (DE)**

EP 0 347 595 B1

**Beschreibung**

Die Erfindung betrifft ein Verfahren zum Betreiben einer Kläranlage, welcher mit Fracht beladenes Abwasser zugeführt wird, das mit Grundwasser und gegebenenfalls mit Oberflächenwasser gemischt ist.

Das aus privaten Haushalten, Restaurants, Hotels und Industriebetrieben anfallende, mit Fracht beladene Abwasser wird über ein Kanalsystem der Kläranlage zugeführt. Dabei ist es nicht zu vermeiden, daß Grundwasser in das Kanalsystem eindringt und zusammen mit dem Abwasser in die Kläranlage gelangt. Das gilt auch für Oberflächenwasser, das insbesondere durch Regen versucht wird und dessen Menge bei starkem Regenfall erheblich zunimmt.

Die einer Kläranlage zuzuführende maximale Abwassermenge bestimmt sich einerseits nach dem Fassungsvermögen der Kläranlage. Diese Abwassermenge wird andererseits aber auch durch behördliche Auflagen vorgegeben. Sie wird von der Behörde nach Erfahrungswerten berechnet, in die unter anderem die Fläche des Einzugsgebiets sowie die Anzahl der sich in Haushalten und Industriebetrieben aufhaltenden Personen und andere Werte eingehen. Dieses seit Jahren angewendete Verfahren ist nicht befriedigend, da es auf Grundlage von empirisch ermittelten Werten arbeitet, die die tatsächlichen Verhältnisse nicht berücksichtigen können. Änderungen bei den der Berechnung zugrundegelegten Daten können außerdem kaum berücksichtigt werden.

Der Erfindung liegt die Aufgabe zugrunde, ein Verfahren anzugeben, mit dem die einer Kläranlage zuzuführende Abwassermenge den tatsächlichen Gegebenheiten des Einzugsbereichs entsprechend bemessen werden kann.

Diese Aufgabe wird bei einem Verfahren der eingangs geschilderten Art gemäß der Erfindung dadurch gelöst,

– daß die im Einzugsgebiet der Kläranlage verbrauchte Menge an Frischwasser ständig gemessen wird und

– daß der daraus gewonnene Wert zur Steuerung der der Kläranlage zuzuführenden Abwassermenge verwendet wird.

Bei Anwendung dieses Verfahrens wird für die Bestimmung der der Kläranlage zuzuführenden Abwassermenge ein stets aktueller, den tatsächlichen Verhältnissen im Einzugsgebiet der Kläranlage entsprechender Wert verwendet. Es wird dabei davon ausgegangen, daß das im Einzugsgebiet verbrauchte Frischwasser nahezu in gleicher Menge als Abwasser in das Kanalsystem der Kläranlage gelangt.

Die gemessene Frischwassermenge kann mit entsprechender zeitlicher Verzögerung von beispielsweise 3 Stunden zur kontinuierlichen Regelung der der Kläranlage zuzuführenden Abwassermenge verwendet werden. Es ist jedoch auch möglich, aus dem gemessenen Frischwasserverbrauch einen Mittelwert zu bilden und der Kläranlage eine diesem Mittelwert entsprechende konstante Abwassermenge zuzuführen.

Von besonderem Vorteil ist bei diesem Verfahren, daß durch die sehr genau meßbare Frischwassermenge ein entsprechend genauer Wert für den Mengenanteil von mit Fracht beladenem Abwasser an der gesamten Abwassermenge gegeben ist, die der Kläranlage zufließt. Damit ist in Trockenzeiten relativ genau festzustellen, wie groß der an sich saubere und daher nicht zu klärende Grundwasseranteil des Abwassers ist. Das ist auch aus wirtschaftlicher Sicht von Bedeutung, da für das Grundwasser keine Gebühren anfallen. Es könnte eigentlich an der Kläranlage vorbeigeführt und direkt einem Vorfluter aufgegeben werden. Kosten entstehen nur für den jetzt bekannten Mengenanteil von tatsächlich mit Fracht beladenem Abwasser.

Auch für den Fall, daß beispielsweise durch starken Regen eine erhöhte Menge von Oberflächenwasser anfällt, ist dieses Verfahren von Vorteil. Da wegen der Messungen in der Trockenzeit das Verhältnis von Abwasser mit Fracht zu Grundwasser in der gesamten Abwassermenge bekannt ist, ergeben sich auch für das zusätzliche Oberflächenwasser ausreichend genaue Werte. Das ist wieder aus wirtschaftlicher Sicht von Interesse, da die Klärung von Oberflächenwasser weniger Aufwand und Kosten erfordert als die Klärung von mit Fracht beladenem Abwasser.

Aus der Kenntnis der in das Kanalsystem der Kläranlage gelangenden Menge an Oberflächenwasser können außerdem auch Rückschlüsse auf die sogenannte Versiegelungsfläche des Einzugsgebiets der Kläranlage gezogen werden. Es ergeben sich genaue Erkenntnisse darüber, wieviel Regen in die Kanäle gelangt und welche Menge desselben in Grünflächen oder anderen offenen Flächen im Erdboden versickert.

Das Verfahren nach der Erfindung wird im folgenden an Hand der Zeichnungen beispielsweise erläutert. Es zeigen:

Fig. 1 ein Diagramm für eine Trockenzeit.

Fig. 2 ein Diagramm für eine Regenzeit.

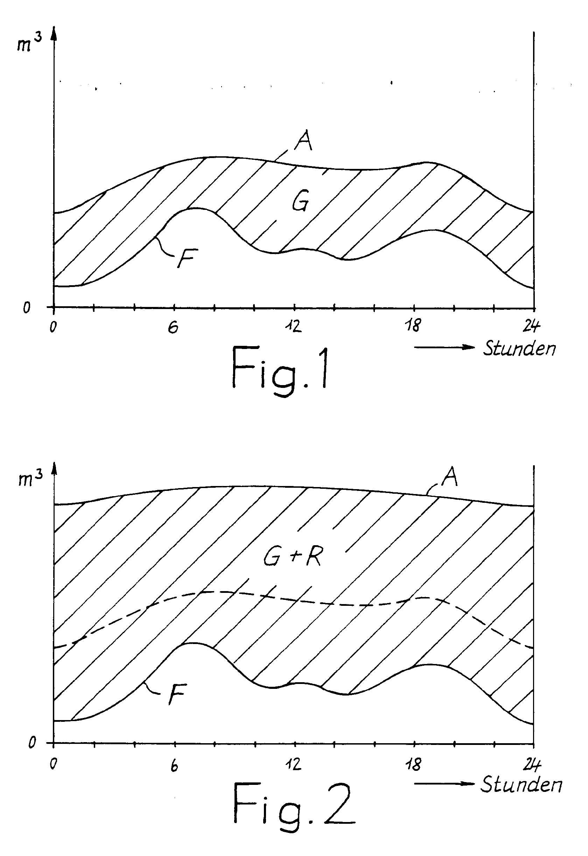

Die Menge F des im Einzugsgebiet der Kläranlage verbrauchten Frischwassers wird kontinuierlich gemessen. Ein typischer Kurvenverlauf über 24 Stunden ist aus den Fig. 1 und 2 zu ersehen. Zusätzlich wird die Menge A des der Kläranlage insgesamt zufließenden Abwassers gemessen. Beide Meßwerte werden ausgewertet. Sie können tabellarisch oder in Kurvenform aufgezeichnet werden. Wenn Frischwasser und Abwasser in einer längeren Trockenperiode, also in der Trockenzeit gemäß Fig. 1, gemessen werden, dann entspricht die Differenz der beiden Meßwerte mit großer Genauigkeit der zur Kläranlage fließenden Grundwassermenge G, die eigentlich nicht zu klären ist. Die Grundwassermenge G entspricht der in Fig. 1 schraffierten Fläche. Es wird dabei davon ausgegangen, daß das im Einzugsgebiet der Kläranlage verbrauchte Frischwasser nahezu vollständig nach einer von den örtlichen Gegebenheiten abhängigen Verzögerungszeit als mit Fracht beladenes Abwasser zur Kläranlage gelangt. Nur dieser Anteil des Abwassers ist zu klären und dementsprechend gebührenpflichtig.

Die Schleusen oder Ventile vor der Kläranlage bzw. die Drehzahl der das Abwasser fördernde Pumpe können also nach Maßgabe der gemessenen Frischwassermenge F gesteuert werden. Dadurch wird der Kläranlage eine sich dauernd ändernde Abwassermenge zugeführt. Die zeitliche Verzögerung zwischen der Messung der Frischwassermenge und der dieser Messung entsprechenden Steuerung der Abwassermenge kann beispielsweise 3 Stunden betragen. Sie ist - wie bereits erwähnt - von den örtlichen Gegebenenheiten abhängig und kann daher auch einen anderen Wert haben. Die nicht der Kläranlage aufgegebene Teilmenge des Abwassers ist sauber genug, um direkt einem Vorfluter zugeführt werden zu können.

Durch die Messung der Frischwassermenge F ist auch eine Zufuhr einer konstant bleibenden Abwassermenge an die Kläranlage möglich. Aus dem während einer bestimmten Zeitdauer von beispielsweise 24 Stunden gemessenen Frischwasserverbrauch wird das arithmetische Mittel gebildet, das als Abwassermenge verwendet wird, die der Kläranlage mittels einer Förderpumpe ständig zugeführt wird. Der vor der Kläranlage befindliche Mischkanal kann dabei als Stauraum verwendet werden, in welchem zeitweise zu viel anfallendes Abwasser gestaut werden kann. Es ist bekannt, daß morgens und abends mehr Abwasser als in den dazwischen liegenden Zeiten anfällt. Das gestaute Abwasser kann in Zeiten mit vermindertem Anfall abgebaut werden.

Wenn durch Regen eine zusätzliche Abwassermenge zur Kläranlage strömt, kann der Mischkanal durch erhöhte Leistung der Förderpumpe schnell geleert werden. Dazu ist nur ein Regenmelder erforderlich, dessen Signal zur Erhöhung der Drehzahl der Förderpumpe verwendet werden kann.

Auch die durch den Regen erhöhte Abwassermenge A wird vor der Kläranlage gemessen. Der entsprechende Kurvenverlauf geht aus Fig. 2 hervor. Die schraffierte Fläche entspricht hier der Grundwassermenge G und der Regenwassermenge R. Die Frischwasserkurve ist die gleiche wie in Fig. 1. Da aus den Werten der Trockenzeit das Verhältnis von mit Fracht beladenem Abwasser zu Grundwasser im gesamten Abwasser bekannt ist, kann durch Differenzbildung auch die Regen- bzw. Oberflächenwassermenge jederzeit bestimmt werden. Wenn an anderer Stelle der zur Kläranlage gehörenden Gemeinde die pro m$^2$ gefallene Regenmenge gemessen wird, läßt sich hierdurch die Versiegelungsfläche des Einzugsgebiets der Kläranlage berechnen. Sie ergibt sich aus der Differenz der pro m$^2$ gefallenen Regenmenge und der bei der Kläranlage ankommenden Regenmenge. Der nicht zur Kläranlage fließende Teil des Regens ist in Grün- und anderen Freiflächen versickert.

## Patentansprüche

1. Verfahren zum Betreiben einer Kläranlage, welcher mit Fracht beladenes Abwasser zugeführt wird, das mit Grundwasser und gegebenenfalls mit Oberflächenwasser gemischt ist, <u>dadurch gekennzeichnet,</u>
– daß die im Einzugsgebiet der Kläranlage verbrauchte Menge an Frischwasser ständig gemessen wird und
– daß der daraus gewonnene Wert zur Steuerung der der Kläranlage zuzuführenden Abwassermenge verwendet wird.

2. Verfahren nach Anspruch 1, <u>dadurch gekennzeichnet,</u> daß der aus der gemessenen Menge Frischwasser bestimmte Wert mit vorgegebener zeitlicher Verzögerung zur steuerung der der Kläranlage zuzuführenden Abwassermenge verwendet wird.

3. Verfahren nach Anspruch 1, <u>dadurch gekennzeichnet,</u> daß aus der gemessenen Menge Frischwasser ein Mittelwert gebildet wird und daß dieser Mittelwert als Bemessungsgrundlage für eine der Kläranlage zuzuführende konstante Abwassermenge verwendet wird.

4. Verfahren nach Anspruch 1 oder 3, <u>dadurch gekennzeichnet,</u> daß der vor der Kläranlage befindliche Mischkanal als Stauraum für überschüssiges Abwasser verwendet wird.

5. Verfahren nach einem der Ansprüche 1 bis 4, <u>dadurch gekennzeichnet,</u> daß zusätzlich die zur Kläranlage gelangende Abwassermenge gemessen und mit der gemessenen Frischwassermenge verglichen wird und daß in einer Trockenzeit durch Differenzbildung der Grundwasseranteil (G) des Abwassers (A) ermittelt wird.

6. Verfahren nach einem der Ansprüche 1 bis 5, <u>dadurch gekennzeichnet,</u> daß in einer Regenzeit unter Berücksichtigung der in der Trockenzeit ermittelten Werte ebenfalls durch Differenzbildung der Regenwasseranteil (R) des Abwassers (A) ermittelt wird.

**Claims**

1. Method for operating a sewage plant to which sewage loaded with pollutant material is fed, said sewage being mixed with ground water and in certain cases with surface water, characterised in that
   – the amount of fresh water consumed in the catchment area of the sewage plant is measured continuously and
   – the value thereby obtained is used to control the amount of sewage to be fed to the sewage plant.

2. Method according to claim 1, characterised in that the value determined from the measured amount of fresh water is used with a preset time lag to control the amount of sewage to be fed to the sewage plant.

3. Method according to claim 1, characterised in that a mean value is formed from the measured amount of fresh water and that this mean value is used as the basis for calculating a constant amount of sewage to be fed to the sewage plant.

4. Method according to claim 1 or 3, characterised in that the combined sewer located in front of the sewage plant is used as a storage area for surplus sewage.

5. Method according to any one of claims 1 to 4, characterised in that in addition the amount of sewage arriving at the sewage plant is measured and compared with the measured amount of fresh water and that in a dry season the proportion of ground water (G) in the sewage (A) is determined by subtraction.

6. Method according to any one ot claims 1 to 5, characterised in that in a wet season the proportion of rainwater (R) in the sewage (A) is determined likewise by subtraction by taking into account the values determined in the dry season.

**Revendications**

1. Procédé pour exploiter une station d'épuration d'eau usée, à laquelle est amenée de l'eau usée chargée mélangée avec des eaux souterraines et le cas écheant avec de l'eau de surface, caractérisé en ce
   – que la quantité d'eau fraîche utilisée dans la zone de desserte de la station d'épuration est mesurée en continu et
   – que la valeur obtenue est utilisée pour la commande de la quantité d'eau usée à amener à la station d'épuration

2. Procédé suivant la revendication 1, caractérisé en ce que la valeur déterminée à partir de la quantité d'eau fraîche mesurée est utilisée, avec un temps de retard prédéterminé, pour commander la quantité d'eau usée à amener à la station d'épuration.

3. Procédé suivant la revendication 1, caractérisé en ce qu'une valeur moyenne est constituée à partir de la quantité d'eau fraîche mesurée, et que cette valeur ' moyenne est utilisée en tant que mesure de référence pour une quantité d'eau usée à amener à la station d'épuration.

4. Procédé suivant la revendication 1 ou 3, caractérisé en ce que la canalisation de mélange située en amont de la station d'épuration est utilisée en tant que capacité de retenue pour de l'eau usée excédentaire.

5. Procédé suivant l'une des revendications 1 à 4, caractérisé en ce que la quantité d'eau usée arrivant en plus à la station d'épuration est mésurée et comparée à la quantité d'eau fraîche mesurée, et en ce que la part en eaux souterraines (G) des eaux usées (A) est déterminée, pendant une sécheresse, par formation de la différence.

6. Procédé suivant l'une des revendications 1 à 5, caractérisé en ce que, pendant une saison de pluie, en tenant compte des valeurs déterminées à l'époque de sécheresse, la part en eau de pluie (R) des eaux usées (A) est déterminée, également par formation de la différence.

Fig.1

Fig.2